(19) Europäisches Patentamt

European Patent Office

Office européen des brevets

(11) **EP 2 362 699 A1**

(12) **EUROPEAN PATENT APPLICATION**

(43) Date of publication:
**31.08.2011 Bulletin 2011/35**

(51) Int Cl.:
*H04W 52/28* (2009.01)          *H04W 52/36* (2009.01)
*H04W 52/14* (2009.01)

(21) Application number: **10154231.4**

(22) Date of filing: **22.02.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicants:
• **Nokia Siemens Networks Oy**
  **02610 Espoo (FI)**

• **Nokia Corporation**
  **02150 Espoo (FI)**

(72) Inventors:
• **Rosa, Claudio**
  **8900 Randers (DK)**
• **Vasenkari, Petri**
  **20250 Turku (FI)**
• **Frederiksen, Frank**
  **9270 Klarup (DK)**

(54) **Power headroom reports for uplink carrier aggregation**

(57)     The present invention provides a method, respective apparatuses, and a computer program product for measuring a power headroom with respect to a component carrier specific maximum transmission power and a power headroom with respect to a UE-specific maximum transmission power. The minimum of the two power headrooms is reported.

Fig. 3

EP 2 362 699 A1

**Description**

Field of the invention

The present invention relates to power headroom reports for uplink carrier aggregation in the uplink of a multi-carrier system, and more particularly, in a mobile communication network like a Long Term Evolution advanced (LTE-A) communication network. Additionally, the invention relates to apparatuses in a communication network, like e.g. a user equipment and a base station, and more particularly, to a (enhanced) node B in a LTE-A communication network. Moreover, the invention relates to a program code and a computer readable medium carrying the program code.

Background

In order to enable the support of wider transmission bandwidths, carrier aggregation (CA) has been introduced in coordinated multipoint transmission/receiving communication networks, like e.g. a Long Term Evolution advanced (LTE-A) communication network, in Release 10 of the 3GPP (Third Generation Partnership Project) specifications. With carrier aggregation, multiple component carriers are aggregated to form a larger overall transmission bandwidth. Thus, a user equipment (UE) can simultaneously transmit on multiple component carriers (CC), each having CC-specific power control settings, maximum power reduction (MPR), additional maximum power reduction (A-MPR), regulatory requirements, etc. Therefore, the user equipment will have both a CC-specific and a UE-specific maximum transmission power and the power headroom reports will also be CC-specific.

However, it is currently not defined what information the CC-specific power headroom reports should contain.

The present invention deals with the content of the CC-specific power headroom reports in uplink multi-carrier systems.

According to Release 8, a power headroom is defined as a difference between the maximum transmission power and the required transmission power. More particularly, in an uplink single-carrier system like, e.g. a LTE communication network, a power headroom valid for a subframe i is defined by the following power control formula:

$$PH(i) = P_{CMAX} - \left\{ 10\log_{10}(M_{PUSCH}(i)) + P_{O\_PUSCH}(j) + \alpha(j) \cdot PL + \Delta_{TF}(i) + f(i) \right\} \quad [\text{dB}]$$

where,

-    $P_{CMAX}$ is the configured user equipment (UE) transmitted power;
-    $M_{PUSCH}(i)$ is the bandwidth of the PUSCH resource assignment expressed in number of resource blocks valid for subframe i;
-    $P_{O\_PUSCH}(j)$ is a parameter composed of the sum of a cell specific nominal component $P_{O\_NOMINAL\_PUSCH}(j)$ provided from higher layers for j=0 and *1* and a UE specific component $P_{O\_UE\_PUSCH}(j)$ provided by higher layers for j=0 and *1*;
-    for j =0 or *1*, $\alpha \in \{0,0.4,0.5,0.6,0.7,0.8,0.9,1\}$ is a 3-bit cell specific parameter provided by higher layers. For j=2, $\alpha(j)$=1;
-    *PL* is the downlink path loss estimate calculated in the UE in dB and PL = referenceSignalPower - higher layer filtered RSRP, where referenceSignalPower is provided by higher layers;

-    $\Delta_{TF}(i) = 10\log_{10}((2^{MPR \cdot K_S} - 1)\beta_{offset}^{PUSCH})$   for $K_s$ =1.25 and 0 for $K_s$=0 where $K_s$ is given by the UE specific parameter *deltaMCS-Enabled* provided by higher layers; and
-    $f(i)=f(i\text{-}1)+\delta_{PUSCH}(i\text{-}K_{PUSCH})$ if accumulation is enabled based on the UE-specific parameter *Accumulation-enabled* provided by higher layers or if the TPC command $\delta_{PUSCH}$ is included in a PDCCH with DCI format 0 where the CRC is scrambled by the Temporary C-RNTI where $\delta_{PUSCH}(i\text{-}K_{PUSCH})$ *was* signaled on PDCCH with DCI format 0 or 3/3A on subframe $i\text{-}K_{PUSCH}$, and where $f$(0) is the first value after reset of accumulation.

By introducing uplink carrier aggregation, two main differences to the previous approaches exist. First, simultaneous transmission of PUCCH (physical uplink control channel) and PUSCH (physical uplink shared channel) on the same CC might be allowed. Further, with carrier aggregation, there are two different maximum transmission powers, i.e. CC-specific and UE-specific, as mentioned above.

Therefore, an extension of the previous power headroom report mechanism according to Release 8 has to be provided.

In such a case, there arises the problem to which maximum transmission power the UE should relate to when measuring and reporting the power headroom. If the CC-specific power headroom is relative to the CC-specific maximum transmission power, then the base station (e.g. an enhanced NodeB (eNodeB) in a LTE-A communication system) cannot determine how close the UE is actually operating to the UE-specific maximum transmission power. For example, the UE could be operating with 2 dB power headroom on each CC while exceeding the UE-specific maximum transmission power.

On the other hand, if the CC-specific power headroom is relative to the UE-specific maximum transmission power, then the base station cannot determine how close the UE is actually operating to the CC-specific maximum transmission power.

Currently, merely simple extensions of the power headroom definition according to Release 8, as mentioned above, have been proposed so far.

Summary of the Invention

In order to solve these problems, according to the present invention, there are provided a method of reporting a power headroom and apparatuses therefore as defined in the claims.

According to an aspect of the invention there is provided an apparatus comprising
a measuring unit configured to measure at least two parameters; and
a reporting unit configured to report a power headroom per component carrier based on the at least two parameters.

According to further refinements of the invention as defined under the above aspects, the apparatus further comprises
a comparing unit configured to compare the at least two parameters, and
the reporting unit is configured to report the power headroom based on the minimum of the at least two parameters.

According to another aspect of the invention there is provided an apparatus comprising
a receiving unit configured to receive information regarding a power headroom reported from a user equipment,
an allocating unit configured to allocate, based on the received information regarding the power headroom, power and/or bandwidth to a user equipment, and
an informing unit configured to inform the user equipment about the allocated power and/or bandwidth,
wherein the information regarding the power headroom is based on at least two parameters.

According to further refinements of the invention as defined under the above aspects,
the information regarding the power headroom is based on a minimum of the at least two parameters,
the at least two parameters are a first power headroom and a second power headroom,
the first power headroom is a power headroom relative to a component carrier specific maximum transmission power, and
the second power headroom is a power headroom relative to a user equipment specific maximum transmission power.

According to a further aspect of the invention there is provided method comprising
measuring at least two parameters, and
reporting a power headroom per component carrier based on the at least two parameters.

According to further refinements of the invention as defined under the above aspects, the method further comprises
comparing the at least two parameters, and
reporting the power headroom based on the minimum of the at least two parameters.

According to still another aspect of the invention there is provided method comprising
receiving information regarding a power headroom reported from a user equipment,
allocating, based on the received information regarding the power headroom, power and/or bandwidth to a user equipment, and
informing the user equipment about the allocated power and/or bandwidth,
wherein the information regarding the power headroom is based on at least two parameters.

According to further refinements of the invention as defined under the above aspects,
the information regarding the power headroom is based on a minimum of the at least two parameters,
the at least two parameters are a first power headroom and a second power headroom,
the first power headroom is a power headroom relative to a component carrier specific maximum transmission power, and
the second power headroom is a power headroom relative to a user equipment specific maximum transmission power.

According to a still further aspect of the invention there is provided a computer program product including a program for a processing device, comprising software code portions for performing, when the program is run on a processing device, any of the steps of the methods as defined above.

According to a still further aspect of the invention there is provided a computer program product as defined above, wherein the computer program product comprises a computer-readable medium on which the software code portions are stored.

According to a still further aspect of the present invention there is provided computer program product as defined above, wherein the program is directly loadable into an internal memory of the processing device.

According to another aspect of the invention there is provided apparatus comprising

a measuring means for measuring at least two parameters, and

a reporting means for reporting a power headroom per component carrier based on the at least two parameters.

According to another aspect of the invention there is provided apparatus comprising

a receiving means for receiving information regarding a power headroom reported from a user equipment,

an allocating means for allocating, based on the received information regarding the power headroom, power and/or bandwidth to a user equipment, and

an informing means for informing the user equipment about the allocated power and/or bandwidth,

wherein the information regarding the power headroom is based on at least two parameters.

Brief Description of the Drawings

These and other objects, features, details and advantages will become more fully apparent from the following detailed description of embodiments of the present invention which is to be taken in conjunction with the appended drawings, in which:

Fig. 1 shows an apparatus which may be a user equipment of a communication network according to an example of the present invention.

Fig. 2 shows an apparatus which may be a base station of a communication network according to an example of the present invention.

Fig. 3 shows a flow chart illustrating a method of reporting a power headroom according to an example of the present invention.

Detailed Description

In the following, embodiments of the present invention are described by referring to general and specific examples of the embodiments. It is to be understood, however, that the description is given by way of example only, and that the described embodiments are by no means to be understood as limiting the present invention thereto.

According to an embodiment of the present invention, there is introduced a CC-specific power headroom reporting mechanism which is able to provide the base station with information on how much power the UE has left for transmission on the corresponding CC when taking into account both the CC-specific maximum transmission power and the UE-specific maximum transmission power.

First, two different CC-specific power headroom definitions are introduced.

A power headroom relative to the CC-specific maximum transmission power, which is an extension of the power headroom report according to Release 8, as mentioned above. This also takes into account the PUCCH power possibly allocated on the same CC.

A power headroom relative to the UE-specific maximum transmission power, which also takes into account the PUCCH power allocated on the same CC as well as the PUCCH and PUSCH powers allocated on other CCs.

When a power headroom report needs to be transmitted, the UE calculates both types of power headroom but only reports the minimum of the two calculated power headrooms. In this way, the base station can estimate how much power/bandwidth it can allocate to a certain UE on a specific CC, independently on whether the limitation comes from the CC-specific or the UE-specific maximum transmission power.

Thus, according to an embodiment of the present invention, it is proposed that the UE reports which power headroom it is experiencing under the constraint of other active carriers using the same transmit powers as they currently do. That is, to which extend the UE is able to adjust its transmission power on this given CC if no other transmission parameters are changed.

Based on the general description of an embodiment of the invention as set out above, an exemplary implementation of the proposed power headroom report could look as follows:

$$PH[k] = \min\left(Pc\max[k] - P[k], P\max_{UE} - 10 \cdot \log_{10}\left[\sum_{j=1,j\neq k}^{N}\min\left(10^{P[j]/10}, 10^{Pc\max[j]/10}\right) + 10^{P[k]/10}\right]\right)$$

Where,

- $P[k] = P_{PUSCH}[k] + P_{PUCCH}[k]$;
- $P_{PUSCH}[k]$ and $P_{PUCCH}[k]$ are the PUSCH and PUCCH transmission powers as calculated according to the CC-specific PUSCH and PUCCH PC formula, respectively;
- N is the number of uplink CCs;
- $P_{CMAX}[k]$ is the CC-specific maximum transmission power on CC k; and
- $Pmax_{UE}$ is the UE-specific maximum transmission power.

In the following, the present invention will be described with reference to the drawing.

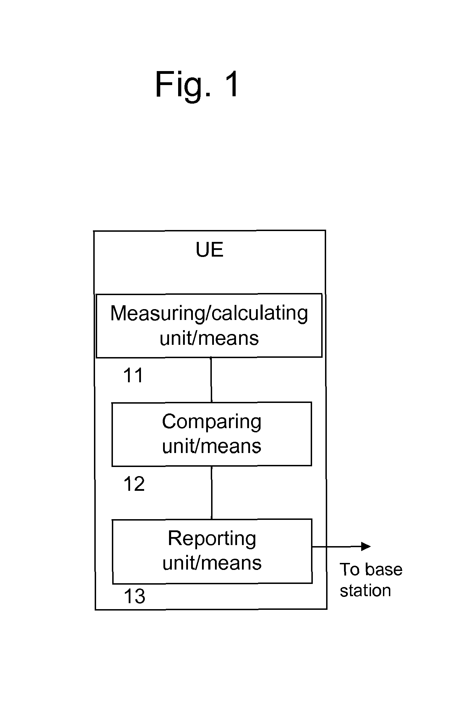

In the examples according to Figs. 1 to 3, the parameters are a power headroom relative to a component carrier specific maximum transmission power, and a power headroom relative to a user equipment specific maximum transmission power, and a minimum of these two headrooms is determined.

Fig. 1 shows an apparatus, which may be a user equipment of a communication network according to an example of the present invention. The user equipment according to an example of the present invention comprises a measuring unit 11 which measures/calculates the power headroom relative to the CC-specific maximum transmission power and the power headroom relative to the UE-specific maximum transmission power. The two headrooms measured/calculated by the measuring unit are then compared by a comparing unit 12 connected to the calculating unit 11 and the comparing unit determines the minimum of the two headrooms. Then, the minimum of the two headrooms determined by the comparing unit is reported to a base station by a reporting unit 13 connected to the comparing unit 12.

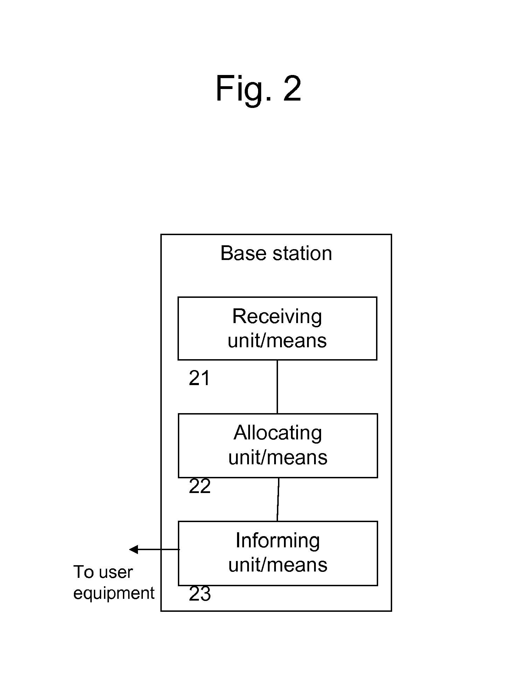

Fig. 2 shows an apparatus which may be a bases station of a communication network according to an example of the present invention. The base station according to an example of the present invention comprises a receiving unit 21 for receiving a power headroom report from a user equipment. Thus, the base station is provided with information on how much power the user equipment has left for transmission on the corresponding component carrier. The receiving unit 21 is connected to an allocation unit 22 which allocates, based on the received power headroom report, power and/or bandwidth to the user equipment on a specific component carrier. An informing unit 23 is connected to the allocating unit 22 to inform the user equipment about the allocated power and/or bandwidth.

Thus, both the power headroom relative to the UE-specific maximum transmission power and the power headroom relative to the CC-specific maximum transmission power are taken into account and the base station can estimate how much power and/or bandwidth is to be allocated to a certain user equipment independently on whether the limitation comes from the UE-specific maximum transmission power or the CC-specific maximum transmission power.

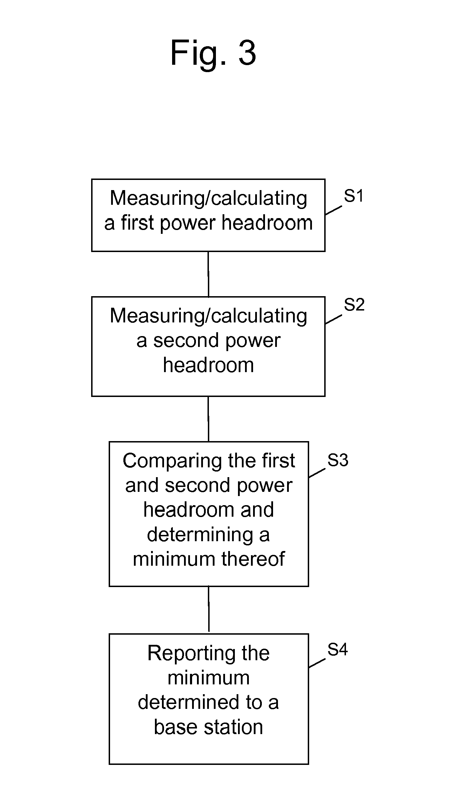

Fig. 3 shows a flow chart illustrating a method of reporting a power headroom according to an example of the present invention.

According to Fig. 3, in step S1, a first power headroom, e.g. a power headroom relative to a UE-specific maximum transmission power, is measured/calculated. Then, in a step S2, a second power headroom, e.g. a power headroom relative to a CC-specific maximum transmission power, is measured/calculated. Further, in a step S3, the first and second power headrooms measured/calculated in steps S1 and S2 are compared to each other and it is determined, which one of the first and second power headrooms is the minimum. Subsequently, only the minimum of the two headrooms is reported to a base station in the communication network in step S4.

It is an advantage of the present invention that the base station can derive information on how close the UE is to the maximum transmission power saturation, independently on whether such limitation comes from the CC-specific maximum transmission power or from the UE-specific maximum transmission power. Such information can be derived by only transmitting a single power headroom report per component carrier thus resulting in a lower signaling overhead compared to solutions proposing multiple types of power headroom reports.

The present invention has been generally described with respect to uplink multiple carrier systems.

As a specific example, the present invention may be applicable to a LTE-A communication network, the user equipment may be a user equipment of such an LTE-A communication network and the base station may be an enhanced NodeB of a LTE-A communication network.

In the foregoing exemplary description of the base station and the user equipment, only the units that are relevant for understanding the principles of the invention have been described using functional blocks. The base station and the user equipment may comprise further units that are necessary for their operation as base station and user equipment, respectively. However, a description of these units is omitted in this specification. The arrangement of the functional blocks of the devices is not construed to limit the invention, and the functions may be performed by one block or further split into sub-blocks. For example, the allocating unit 22 and the informing unit can be combined into a single block performing the operations of both blocks, respectively.

For the purpose of the present invention as described herein above, it should be noted that

- method steps likely to be implemented as software code portions and being run using a processor at a network control element or terminal (as examples of devices, apparatuses and/or modules thereof, or as examples of entities including apparatuses and/or modules therefore), are software code independent and can be specified using any known or future developed programming language as long as the functionality defined by the method steps is preserved;

- generally, any method step is suitable to be implemented as software or by hardware without changing the idea of the embodiments and its modification in terms of the functionality implemented;

- method steps and/or devices, units or means likely to be implemented as hardware components at the above-defined apparatuses, or any module(s) thereof, (e.g., devices carrying out the functions of the apparatuses according to the embodiments as described above, UE, eNode-B etc. as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;

- devices, units or means (e.g. the above-defined apparatuses, or any one of their respective units/means) can be implemented as individual devices, units or means, but this does not exclude that they are implemented in a distributed fashion throughout the system, as long as the functionality of the device, unit or means is preserved;

- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;

- a device may be regarded as an apparatus or as an assembly of more than one apparatus, whether functionally in cooperation with each other or functionally independently of each other but in a same device housing, for example.

It is noted that the embodiments and general and specific examples described above are provided for illustrative purposes only and are in no way intended that the present invention is restricted thereto. Rather, it is the intention that all variations and modifications be included which fall within the scope of the appended claims.

**Claims**

1. An apparatus comprising:

   a measuring unit configured to measure at least two parameters; and
   a reporting unit configured to report a power headroom per component carrier based on the at least two parameters.

2. The apparatus according to claim 1, further comprising
   a comparing unit configured to compare the at least two parameters, wherein
   the reporting unit is configured to report the power headroom based on the minimum of the at least two parameters.

3. An apparatus, comprising:

   a receiving unit configured to receive information regarding a power headroom reported from a user equipment;
   an allocating unit configured to allocate, based on the received information regarding the power headroom, power and/or bandwidth to a user equipment, and
   an informing unit configured to inform the user equipment about the allocated power and/or bandwidth,
   wherein the information regarding the power headroom is based on at least two parameters.

4. The apparatus according to claim 3, wherein
   the information regarding the power headroom is based on a minimum of the at least two parameters.

**5.** The apparatus according to anyone of claim 1 to 4, wherein
the at least two parameters are a first power headroom and a second power headroom.

**6.** The apparatus according to anyone of claims 1 to 5, wherein
the first power headroom is a power headroom relative to a component carrier specific maximum transmission power, and
the second power headroom is a power headroom relative to a user equipment specific maximum transmission power.

**7.** A method, comprising:

measuring at least two parameters; and
reporting a power headroom per component carrier based on the at least two parameters.

**8.** The method according to claim 7, further comprising
comparing the at least two parameters, and
reporting the power headroom based on the minimum of the at least two parameters.

**9.** A method, comprising:

receiving information regarding a power headroom reported from a user equipment;
allocating, based on the received information regarding the power headroom, power and/or bandwidth to a user equipment, and
informing the user equipment about the allocated power and/or bandwidth,
wherein the information regarding the power headroom is based on at least two parameters.

**10.** The method according to claim 9, wherein
the information regarding the power headroom is based on a minimum of the at least two parameters.

**11.** The method according to anyone of claims 7 to 10, wherein
the at least two parameters are a first power headroom and a second power headroom.

**12.** The method according to anyone of claims 7 to 11, wherein
the first power headroom is a power headroom relative to a component carrier specific maximum transmission power, and
the second power headroom is a power headroom relative to a user equipment specific maximum transmission power.

**13.** A computer program product including a program for a processing device, comprising software code portions for performing the steps of any one of claims 7 to 12 when the program is run on the processing device.

**14.** The computer program product according to claim 13, wherein the computer program product comprises a computer-readable medium on which the software code portions are stored.

**15.** The computer program product according to claim 13, wherein the program is directly loadable into an internal memory of the processing device.

**16.** An apparatus, comprising:

a measuring means for measuring at least two parameters; and
a reporting means for reporting a power headroom per component carrier based on the at least two parameters.

**17.** An apparatus, comprising:

a receiving means for receiving information regarding a power headroom reported from a user equipment;
an allocating means for allocating, based on the received information regarding the power headroom, power and/or bandwidth to a user equipment, and
an informing means for informing the user equipment about the allocated power and/or bandwidth,
wherein the information regarding the power headroom is based on at least two parameters.

# Fig. 1

# Fig. 2

Base station

Receiving unit/means

21

Allocating unit/means

22

Informing unit/means

To user equipment

23

# Fig. 3

```
┌─────────────────────────┐
│   Measuring/calculating  │  S1
│   a first power headroom │
└─────────────────────────┘
            │
┌─────────────────────────┐
│   Measuring/calculating  │  S2
│     a second power       │
│        headroom          │
└─────────────────────────┘
            │
┌─────────────────────────┐
│   Comparing the first    │  S3
│   and second power       │
│   headroom and           │
│   determining a          │
│   minimum thereof        │
└─────────────────────────┘
            │
┌─────────────────────────┐
│     Reporting the        │  S4
│       minimum            │
│   determined to a        │
│     base station         │
└─────────────────────────┘
```

Europäisches
Patentamt
European
Patent Office
Office européen
des brevets

## EUROPEAN SEARCH REPORT

Application Number

EP 10 15 4231

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CATT: "Impact of carrier aggregation on MAC layer" 3GPP DRAFT; R2-095484, no. Miyazaki; 20091012, 12 October 2009 (2009-10-12), pages 1-5, XP050390040 [retrieved on 2009-10-04] * section 2.5; pages 2-3 * ----- | 1-17 | INV. H04W52/28 H04W52/36 H04W52/14 |
| X | HUAWEI: "UL Power Control in Carrier Aggregation" 3GPP DRAFT; R1-093840 UL POWER CONTROL IN CARRIER AGGREGATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388347 [retrieved on 2009-10-06] * the whole document * ----- | 1-4, 7-10, 13-17 | |
| | | | TECHNICAL FIELDS SEARCHED (IPC) H04W |

The present search report has been drawn up for all claims

| Place of search | Date of completion of the search | Examiner |
|---|---|---|
| Berlin | 26 July 2010 | Feng, Mei |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)